# FASCICULE DE BREVET EUROPEEN

(11) **EP 0 398 784 B1**
(45) Date de publication et mention de la délivrance du brevet: **20.04.1994**
(21) Numéro de dépôt: 90401226.7
(22) Date de dépôt: 09.05.1990
(51) Int. Cl.: B60R 13/00, B62D 35/00

(54) **Dispositif de marquage d'un véhicule**
Fahrzeugmarkierungsvorrichtung
Vehicle marking device

(30) Priorité: 17.05.1989 FR 8906882
(43) Date de publication de la demande: 22.11.1990
(73) Titulaire: AUTOMOBILES PEUGEOT, 75116 Paris (FR); AUTOMOBILES CITROEN, 92200 Neuilly-sur-Seine (FR)
(72) Inventeur: Coco, Donato, F-75013 Paris (FR)
(74) Mandataire: Boivin, Claude

(56) Documents cités:
- FR-A- 2 575 127
- US-A- 1 646 689
- US-A- 4 033 619
- PATENT ABSTRACTS OF JAPAN, vol. 6, no. 71 (M-126)[949], 6 mai 1982, page 102 M 126; & JP-A-57 11 132 (TSUTOMU IDE) 20-01-1982
- PATENT ABSTRACTS OF JAPAN, vol. 7, no. 145 (M-224)[1290], 24 juin 1983, page 100 M 224; & JP-A-58 56 942 (NISSAN JIDOSHA K.K.) 04-04-1983

## Description

La présente invention a pour but de former sur un véhicule une inscription pouvant être de dimensions suffisamment importantes pour pouvoir être lue d'assez loin sans nuire à l'esthétique et sans gêne pour le conducteur et les passagers.

Le dispositif de marquage selon l'invention est caractérisé en ce que l'inscription figure sur une superstructure placée au voisinage d'une surface réfléchissante du véhicule de manière à se refléter sur cette surface et en ce la partie de la superstructure où se trouve l'inscription est constituée de zones opaques et de zones transparentes dont la disposition relative fait apparaître l'inscription souhaitée, de sorte que le reflet de cette inscription apparaît dans celui de la superstructure et en contraste avec lui.

Cette partie de la superstructure où se trouve l'inscription peut par exemple être en un matériau opaque et percée d'ouvertures dont la forme reproduit l'inscription. Inversement, elle peut être transparente et recouverte d'une matière opaque découpée de manière à former l'inscription.

On a décrit ci-après, à titre d'exemple non limitatif, deux modes de réalisation du dispositif de marquage selon l'invention, avec référence au dessin annexé dans lequel :
La Figure 1 est une vue en perspective d'un premier mode de réalisation;
La Figure 2 est une vue en perspective du second mode de réalisation.

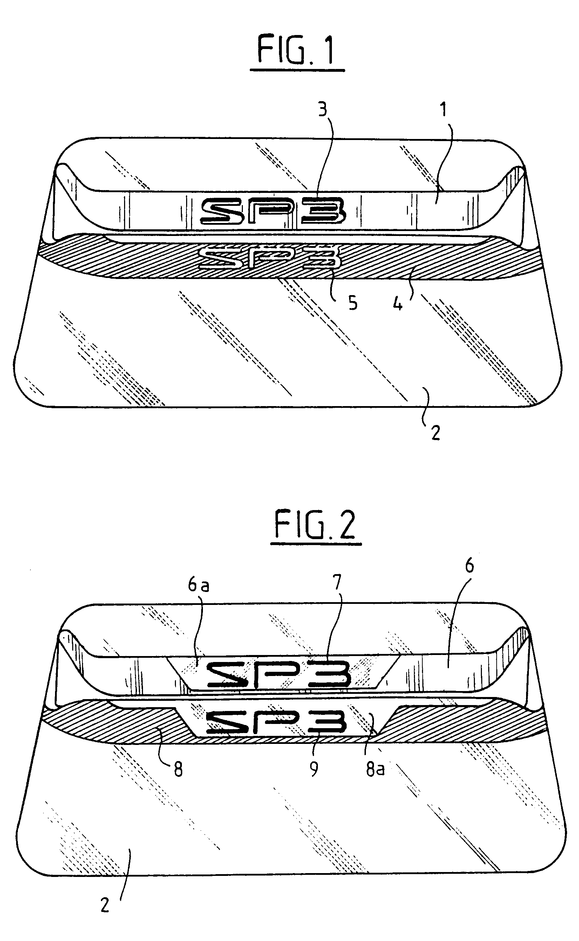

A la Figure 1, on voit un becquet extérieur aérodynamique 1 qui surmonte la lunette arrière 2 d'un véhicule automobile. Ce becquet est opaque et est percé d'ouvertures 3 dont la disposition relative est celle d'une inscription désirée, celle-ci étant "SP3" dans l'exemple représenté.

Le becquet 1 se reflète sur la face externe de la lunette arrière 2 en formant sur celle-ci une bande sombre 4. Les ouvertures 3 laissent passer la lumière ambiante de sorte que l'inscription formée par ces ouvertures apparaît en clair sur la bande sombre 4, comme indiqué en 5.

Dans le mode de réalisation de la Figure 2, le becquet 6 est opaque, mais comporte dans sa zone médiane une partie transparente 6a. Une inscription 7 est réalisée sur la face supérieure de ce becquet, par exemple par sérigraphie ou à l'aide d'éléments adhésifs. Dans ces conditions, le becquet 6 se reflète sur la lunette arrière 2 en formant une bande sombre 8 comportant une partie claire 8a dans sa zone médiane. L'inscription apparait en sombre sur ce fond clair, comme indiqué en 9. Afin de rendre l'inscription plus visible, on peut, pour un angle de vision donné, faire en sorte que le reflet apparaisse au niveau d'un élément de l'habitacle tel qu'un appui-tête. On peut aussi placer un élément transparent de couleur sur la superstructure au niveau de l'inscription.

Il va de soi que la présente invention ne doit pas être considérée comme limitée aux deux modes de réalisation décrits et représentés mais en couvre, au contraire, toutes les variantes, selon les revendications dépendantes.

## Revendications

1. Dispositif pour réaliser une inscription sur un véhicule,
caractérisé en ce que l'inscription (3 ou 7) figure sur une superstructure (1 ou 6) placée au voisinage d'une surface réfléchissante (2) du véhicule de manière à se refléter sur cette surface et en ce que la partie de la superstructure (1 ou 6) où se trouve l'inscription est constituée de zones opaques et de zones transparentes dont la disposition relative fait apparaître l'inscription souhaitée, de sorte que le reflet (5 ou 9) de cette inscription apparaît dans celui (4 ou 8a) de la superstructure et en contraste avec celui-ci.

2. Dispositif selon la revendication 1,
caractérisé en ce que la partie de la superstructure (1) où se trouve l'inscription (3) est réalisée en un matériau opaque et percée d'ouvertures (3) dont la forme reproduit l'inscription.

3. Dispositif selon la revendication 1,
caractérisé en ce que la partie (6a) de la superstructure (6) où se trouve l'inscription est transparente et recouverte d'une matière opaque (7) découpée de manière à former l'inscription.

4. Dispositif selon la revendication 3,
caractérisé en ce que la matière opaque (7) est constituée par un adhésif collé sur la partie transparente.

5. Dispositif selon la revendication 3,
caractérisé en ce que la matière opaque (7) est déposée par sérigraphie.

6. Dispositif selon l'une quelconque des revendications précédentes,
caractérisé en ce que la superstructure (1 ou 6) est placée à l'extérieur du véhicule.

7. Dispositif selon la revendication 6,
caractérisé en ce que la superstructure est constituée par un becquet aérodynamique.

8. Dispositif selon l'une quelconque des revendications précédentes,
caractérisé en ce que la surface réfléchissante (2) est la face extérieure de la lunette arrière du véhicule.

## Patentansprüche

1. Vorrichtung zur Realisierung einer Beschriftung auf einem Fahrzeug dadurch gekennzeichnet, daß die Beschriftung (3 oder 7) auf einem Überbau (1 oder 6) ausgestaltet ist, der in der Nähe einer reflektierenden Oberfläche (2) des Fahrzeugs derart angeordnet ist, daß er sich in dieser Oberfläche spiegelt und daß der Teil des Überbaues (1 oder 6), in dem sich die Beschriftung befindet, aus undurchsichtigen und durchsichtigen Zonen ausgebildet ist, deren relative Anordnung die gewünschte Beschriftung erscheinen läßt derart, daß das Spiegelbild (5 oder 9) dieser Beschriftung in demjenigen (4 oder 8a) des Überbaues und im Kontrast zu diesem erscheint.

2. Vorrichtung nach Anspruch 1 dadurch gekennzeichnet, daß der Teil des Überbaues (1), in dem sich die Beschriftung (3) befindet, aus einem undurchsichtigen Material hergestellt und von Öffnungen (3) durchbrochen ist, deren Form die Beschriftung widergibt.

3. Vorrichtung nach Anspruch 1 dadurch gekennzeichnet, daß der Teil (6a) des Überbaues (6), in dem sich die Beschriftung befindet, durchsichtig ist und von einem undurchsichtigen Material (7) überdeckt ist, das so ausgeschnitten ist, daß es die Beschriftung ausbildet.

4. Vorrichtung nach Anspruch 3 dadurch gekennzeichnet, daß das undurchsichtige Material (7) durch einen Aufkleber gebildet wird, der auf den durchsichtigen Teil aufgeklebt ist.

5. Vorrichtung nach Anspruch 3 dadurch gekennzeichnet, daß das undurchsichtige Material (7) durch Siebdruck aufgebracht ist.

6. Vorrichtung nach einem der vorhergehenden Ansprüche dadurch gekennzeichnet, daß der Überbau (auf 1 oder 6) an der Außenseite des Fahrzeugs angeordnet ist.

7. Vorrichtung nach Anspruch 6 dadurch gekennzeichnet, daß der Überbau durch einen aerodynamischen Spoiler gebildet wird.

8. Vorrichtung nach einem der vorhergehenden Ansprüche dadurch gekennzeichnet, daß die reflektierende Oberfläche (2) die Außenfläche der Heckfensterscheibe des Fahrzeugs ist.

## Claims

1. Device to embody an inscription on a vehicle, wherein the inscription (3 or 7) is featured on a superstructure (1 or 6) placed close to a reflecting surface (2) of the vehicle so as to reflect onto this surface and wherein the portion of the superstructure (1 or 6) where the inscription is located is formed of opaque zones and transparent zones whose relative disposition makes the desired inscription appear so that the reflection (5 or 9) of this inscription appears on that (4 or 8a) of the superstructure and in contrast with the latter.

2. Device according to claim 1,
wherein the portion of the superstructure (1) where the inscription (3) is located is made of an opaque material and pierced with openings (3) whose shape reproduces the inscription.

3. Device according to claim 1,
wherein the portion (6a) of the superstructure (6) where the inscription is located is transparent and coated with an opaque material (7) cut in such a way as to form the inscription.

4. Device accoridng to claim 3,
wherein the opaque material (7) is constituted by an adhesive glued onto the transparent portion.

5. Device according to claim 3,
wherein the opaque material (7) is deposited by means of serial numbering.

6. Device according to any one of the preceding claims,
wherein the superstructure (1 or 6) is placed outside the vehicle.

7. Device according to claim 6,
wherein the superstructure is constituted by an aerodynamic projection.

8. Device according to any one of the preceding claims,
wherein the reflecting surface (2) is the external face of the rear window of the vehicle.
